# EUROPEAN PATENT APPLICATION

(11) **EP 1 479 642 A2**
(43) Date of publication of application: **24.11.2004**
(21) Application number: 04011521.4
(22) Date of filing: 14.05.2004
(51) Int. Cl.: B66F 9/065

(54) **Load handling machine**

(30) Priority: 20.05.2003 GB 0311520
(71) Applicant: J.C. BAMFORD EXCAVATORS LIMITED, Uttoxeter Staffordshire ST14 5JP (GB)
(72) Inventor: Jowett, Peter, Loughborough Leicestershire LE11 3QL (GB)
(74) Representative: Lucking, David John

(57) **Abstract**

A load handling machine (10) having a chassis (11) including an elongate front frame part (22) and a rear frame part (23), and an operator's cab (12) supported at least in part by the front frame (22) mounted to one side of a longitudinal machine axis (A), the front frame part (22) including a pair of frame members (24, 25) which extend generally parallel in a generally longitudinal direction of the machine (10), the front frame part (22) providing a mounting for a front axle (16) carrying a pair of steerable ground engaging wheels (19), each of which is rotatable about a first transverse front axle axis (C) when the wheels (19) are each in a straight ahead position, and the front frame part (22) providing a mounting for a working arm (15) between the pair of front frame members (24, 25) longitudinally between the first transverse axis (C) and the cab (12), the working arm (15) including first (64) and second (65) parts which are pivotally connected together so that the angle (α) between the first (64) and second (65) parts about a second transverse axis (E) is adjustable, the first arm part (64) being pivotally connected at or adjacent one end, to the front frame part (22) at a longitudinal position between the front axle axis (C)and the cab (12) for pivotal movement about a third transverse axis (F), and the first arm part (64) being connected at or adjacent an opposite end to a first end of the second arm part (65), and there being in use, a working implement (78) mounted at or adjacent to a second end of the second arm part (65).

## Description

### Description of Invention

This invention relates to a load handling machine of the kind having a working arm which may be manipulated to lift and lower loads in or on a working implement such as a loading forks, provided at or adjacent an end of the arm.

Such machines with varying geometries are known, but a common geometry is to provide an operator's cab at one side of the machine, and the working arm at the side of the cab, on or near a central axis of the machine. The working arm typically is mounted on a superstructure of the machine, at a position rearwardly of the operator's cab, and extends forwardly by the side of the cab, forwardly of a front of the superstructure. The arm is lifted and lowered by linear actuators, and commonly includes a plurality of telescopic sections, so that the load can not only be raised by the working arm, but moved towards and away from the superstructure, whilst the superstructure includes a ground engaging structure by means of which the machine may move on the ground to transport the load for example.

It will be appreciated that the working arm needs to be sufficiently strong and robust in order to handle a rated load; where the arm and load are heavy, particularly when the load is lifted to a significant height, the arm and load may apply high torsional forces to the superstructure of the machine. Such forces are aggravated where the ground is uneven, particularly transversely inclined when the loaded working arm may apply substantial sideways torsional loadings to the machine superstructure.

A machine with an alternative geometry is disclosed in French specification FR-A-2761972. In this document, a machine has an articulated chassis to effect steering of the machine, but importantly, there is a working arm which has a plurality of pivotally connected sections with a base section mounted on a machine superstructure. Relative pivoting between working arm sections is achieved by a complex arrangement of linear actuators which "push and pull" between the arm sections, and create visibility problems.

Moreover, the pivotal connection between the base section of the arm and the superstructure is at a longitudinal position forwardly of the axis of rotation of the front wheels. Thus to maintain the pivotal connection as close as possible to the axis, the pivotal connection has to be raised up which can lead to much reduced visibility.

According to the invention we provide a load handling machine having a chassis including an elongate front frame part and a rear frame part, and an operator's cab supported at least in part by the front frame mounted to one side of a longitudinal machine axis, the front frame part including a pair of frame members which extend generally parallel in a generally longitudinal direction of the machine, the front frame part providing a mounting for a front axle carrying a pair of steerable ground engaging wheels, each of which is rotatable about a first transverse front axle axis when the wheels are each in a straight ahead position, and the front frame part providing a mounting for a working arm between the pair of front frame members longitudinally between the first transverse axis and the cab, the working arm including first and second parts which are pivotally connected together so that the angle between the first and second parts about a second transverse axis is adjustable, the first arm part being pivotally connected at or adjacent one end, to the front frame part at a longitudinal position between the front axle axis and the cab for pivotal movement about a third transverse axis, and the first arm part being connected at or adjacent an opposite end to a first end of the second arm part, and there being in use, a working implement mounted at or adjacent to a second end of the second arm part.

Thus the geometry of a machine in accordance with the invention may more ably withstand particularly sideways torsional loadings applied by a loaded working arm than conventional machines, without the disadvantages of the machine of FR-A-2761972. Particularly by providing a mounting for the working arm on the front frame between the pair of front frame members longitudinally between the first transverse axis and the cab, particularly sideways torsional forces applied by a loaded working arm may be dissipated through a short extent of the front frame members and not through a machine superstructure as a whole as with a more conventional arrangement. Thus by making the front frame members sufficiently strong, the chassis may be sufficiently robust in the areas where particularly required.

Moreover, with the particular geometry of working arm described, an operator's visibility may be less restricted compared with the machine described in FR-A-2761972, and machines in which the working arm is mounted on the superstructure behind the cab, and some significant advantages with respect to load handling capabilities may be realised.

Desirably, there is provided at least one first linear actuator which acts between the first arm part and the second arm part and which is operable to adjust the angle between the first and second arm parts about the second transverse axis. Comparing this to FR-A-2761972, sight lines particularly to the side of the cab, are improved, because in the previous proposal, with the "push-pull" actuator arrangement, the arm parts, in a lowered position, lie side by side in parallel, which obscure vision.

Preferably, to move the first arm part relative to the front frame about the first transverse axis, there is provided at least one second linear actuator which acts between the front frame part and the first working arm part, the second actuator being pivotally connected to the front frame part at a position located rearwardly of the mounting of the working arm to the front frame part, and to the first arm part so as to extend rearwardly away from the first arm part to its front frame mounting.

Thus again, forces experienced during lifting of particularly a loaded working arm may be dissipated through the front frame part by virtue of the second actuator being directly mounted on the front frame part. Also, by positioning the actuator thus, no actuator is required on top of the arm as in FR-A-2761972, thus again, comparing sight lines.

Preferably the second actuator mounting to the front frame part is positioned towards a rear or rearwardly of the cab so that this actuator does not obscure the forward visibility of the operator at least in most modes of operation, as at least a majority of the second actuator will be behind the operator's range of forward vision.

The second part of the working arm may include a plurality of relatively telescopic sections, so that the working implement and any carried load, may be moved towards and away from the remainder of the machine, either or both by adjusting the angle between the first and second arm parts about the second transverse axis, and telescoping a section of the second arm part relative to another telescopic section of the second part.

The front frame members may each include a generally upright plate-like part, defining between them, a space. The mounting for the working arm at least, may extend between and be secured to each of the plate-like parts. To increase the torsional stiffness of the front frame, upper and lower closure plates may be secured to the upright plate-like parts, preferably by welding, in positions where they will not interfere with movement of the working arm, so that where such upper and lower plates are provided, the front frame will have a generally box section configuration.

The front axle may be rigidly fixed to the front frame part, or the front axle mounting may permit the axle to oscillate about a generally longitudinal axis which may be coincident with or slightly offset from a central longitudinal axis of the machine. By "rigidly fixed" we mean that the front axle is not able to oscillate relative to the front frame part in response to ground conditions, although adjustment of the axle relative to the front frame part by an actuator may be possible for levelling purposes.

Preferably the front axle is provided at or adjacent a front end of the front frame part such that the longitudinal axis of oscillation is located between tops and bottoms of the front frame members. The front frame members may be shaped at the front of the front frame part so that at least a portion of the front axle is located below the tops of the front frame members. Preferably, the front frame part includes an end closure, which may also provide a part of the mounting. For example, the front axle may include a pair of trunnions which extend from an axle body along a longitudinal axis, one of the trunnions being received in an opening in a transverse mounting member which extends between the front frame members, and the other trunnion being received in an axially coincident opening provided in the end closure.

The front frame part may include a transverse support member connected to and extending transversely from one of the front frame members, to provide support for the cab. A fluid reservoir such as a fuel tank may securely be mounted generally beneath the transverse support member.

The rear frame part of the chassis may be integral with or secured and rigidly connected to the front frame part, and may be shaped to provide an upper support surface on which the first part of the arm may rest when in a lowered position.

Thus the rear frame may include a pair of side members which may be spaced apart at least over a substantial portion of their longitudinal extent wider than the front frame members, and may include upper and lower closure plates as required to increase the stiffness of the rear frame part.

The rear frame part may provide a mounting for a rear axle which may carry a pair of wheels which may be steerable. The wheels may be rotatable about a fourth generally transverse axis (at least when the wheels, if steerable are in a straight ahead position).

The rear axle may be rigidly fixed to the rear frame part, particularly where the front axle is an oscillating axle. Alternatively, particularly where the front axle is rigidly mounted, the rear axle mounting may allow the rear axle to oscillate about a generally longitudinal axis such that the longitudinal axis of oscillation is located between tops and bottoms of the rear frame side members. The rear frame side members may be shaped so that at least a portion of the rear axle is located below the tops of the rear frame side members. Preferably, the rear frame part includes an end closure, which may also provide a part of the rear axle mounting. For example, the rear axle may include a pair of trunnions which extend from an axle body along the axis of oscillation, one of the trunnions being received in an opening in a transverse mounting member which extends between the rear frame side members, and the other trunnion being received in an axially coincident opening provided in the end closure.

Although an engine of the machine could be mounted on an opposite side of the working arm to the cab, preferably the engine is carried by the rear frame part behind the cab, so that the weight of the engine can usefully be employed as a counterweight. Moreover a cooling pack for providing cooling for the engine and/or for hydraulic fluid for the various actuators, may be provided on the other side of the working arm to the cab, or behind the cab.

Embodiments of the invention will now be described with reference to the accompanying drawings in which:-
FIGURE 1 is a side illustrative view of a load handling machine in accordance with the present invention, showing a working arm in a fully lowered condition;
FIGURE 2 is a view similar to figure 1, but emphasising the configuration of a chassis of the machine, and showing the working arm in a raised operative condition;
FIGURE 3 is a top plan view of the chassis only of the machine of figures 1 and 2;
FIGURE 4 is an illustrative perspective partly exploded view showing the means by which an axle of the machine of figures 1 and 2 is mounted on the chassis.

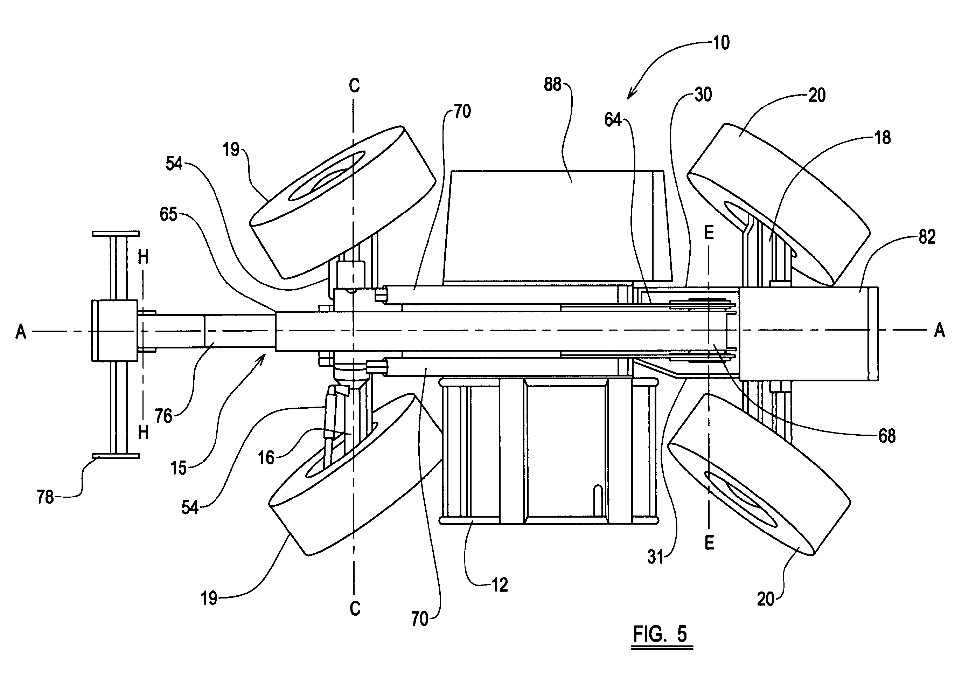

FIGURE 5 is a top plan view of the machine shown in figure 1.

Referring to the drawings, a load handling machine 10 has a chassis 11, an operator's cab 12, and a working arm 15. A ground engaging structure including a front axle 16 and a rear axle 18 is carried by the chassis 11, each axle 16, 18 having a pair of ground engaging wheels 19, 20 respectively.

The chassis 11 includes a generally elongate front frame part 22, and a rear frame part 23, rigidly connected together or integrally provided. The front frame part 22 includes a pair of generally elongate frame members 24, 25 which are each of upright plate-like configuration, which extend generally parallel to one another and have between them, a space 26. Each front frame member 24, 25 has a substantial thickness and thus strength, but to increase the torsional stiffness of the front frame part 22, top and bottom closure plates 27, 28 are provided, so that at least in regions of the front frame part 22 where the top and bottom closure plates 27, 28 are provided, the chassis 11 is of a box section configuration.

The rear frame part 23 also has a pair of side members 30, 31 which provide a space 32 between them, the rear frame part 23 also including top and bottom closure plates 34, 35 to increase its strength.

The front frame 22 has a transverse mounting member 38 at a front end, which extends between the front frame members 24, 25 and provides part of a mounting for the front axle 16.

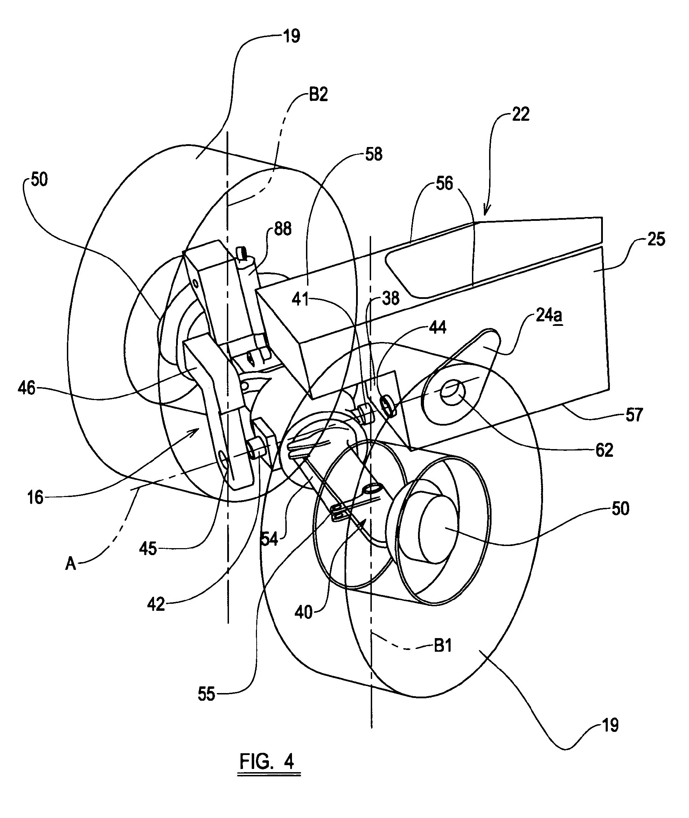

The front axle 16, as best seen in figure 4, includes a body 40 from which extends a pair of trunnions 41, 42, one of the pair, trunnion 41, extending rearwardly of the body 40 along a generally longitudinal machine axis A about which in use, the axle 16 may pivot. In one example, where the rear axle of the machine is rigidly fixed, the front axle 16 may be allowed to oscillate in response to changes in ground level experienced by the wheels 19 about the machine axis A, the other 42 of the trunnions also extending along machine axis A but forwardly of the body 40 of the axle 16. Whilst the front axle 16 may be allowed to oscillate, the axle 16 is not a sprung axle, in that the point of connection between the front axle 16 and the front frame 22 about which the axle 16 may oscillate is fixed relative to the remainder of the machine 10.

In the example shown though, the front axle 16 is fixed relative to the front frame part 22 and does not oscillate in response to ground levels experienced as the machine moves, although the axle 16 may be pivoted under the control of an actuator 88, for levelling purposes, particularly during loading and unloading.

The axle 16 is mounted by the front frame 22 by the rearwardly extending trunnion 41 being received in an opening 44 in the transverse mounting member 38, and the forwardly extending trunnion 42 being received in an axially coincident opening 45 in an end closure 46 which is secured to the front end of the front frame 22. The front frame members 24, 25 are cut away to provide a recess below upper surfaces of the frame members 24, 25 to accommodate at least a portion of the front axle 16 body 40 at their front ends.

The front wheels 19 carried by the front axle 22 may be steerable wheels, having hubs 50 pivotally mounted on the axle body 40, for pivoting movement about respective generally upright axes B1 and B2. Steering may be effected by any desired means, there being shown in figure 4 a hydraulically powered track rod 54 extending between respective levers 55 of the hubs 50, as is conventional in the art.

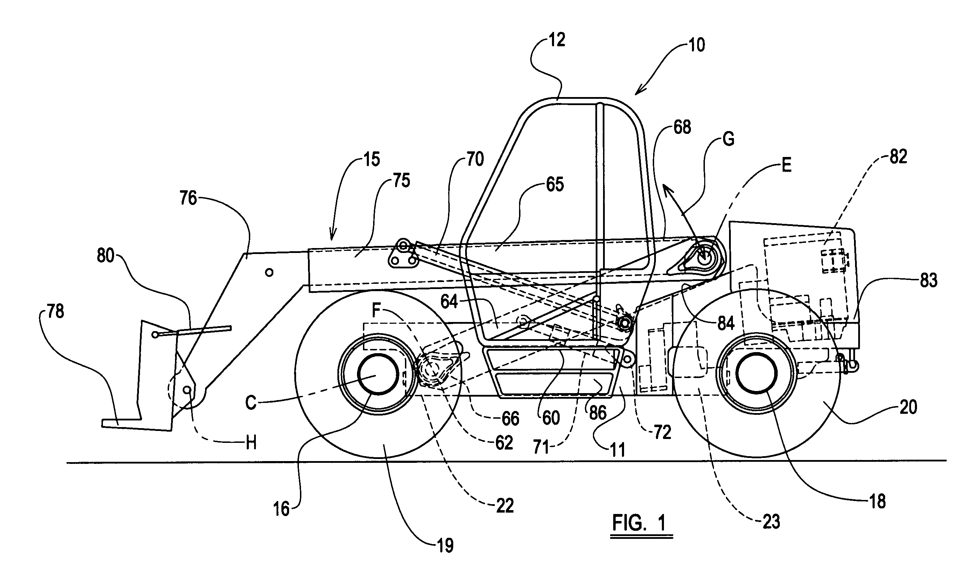

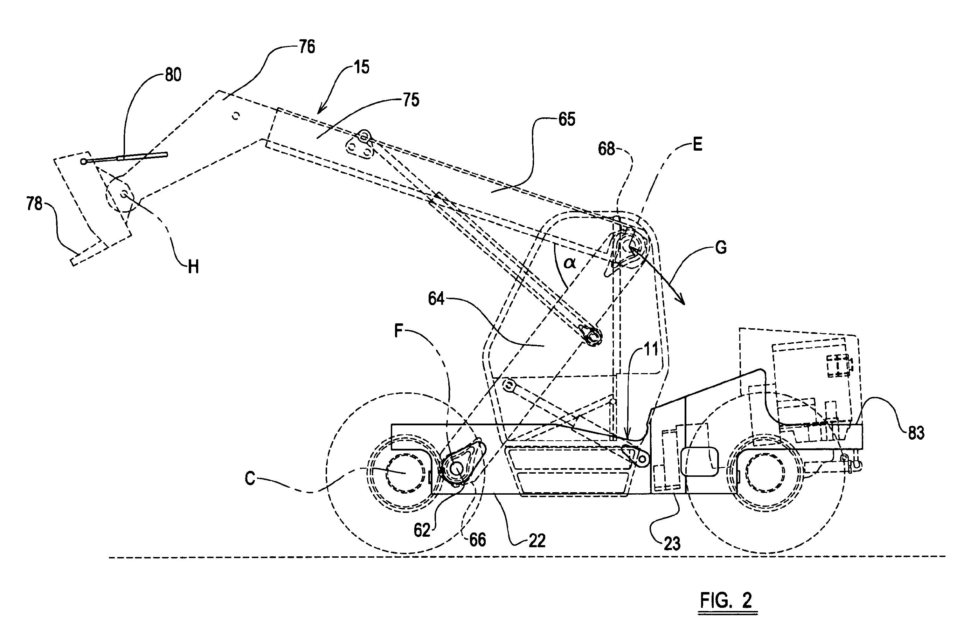

Thus a first transverse axis C about which the wheels 19 rotate, at least when in their straight ahead positions shown figures 1 and 2, is located between tops 56 and bottoms 57 of the front frame members 24, 25, as is the horizontal axis A.

The rear axle 18 is similarly mounted by the rear frame part 23 as best seen in figure 2, with parts corresponding to those labelled for the front axle 16 mounting being indicated by the same reference numerals but with a prime sign added. However, where the front axle 16 is rigidly mounted, the rear axle 18 is able to oscillate about a longitudinal axis D in response to ground conditions as the machine moves over the ground.

Desirably, the rear wheels 20 are steerable in a similar manner to the front wheels 19, so that the machine 10 may be two or four wheel steered depending on selected operator controls. The longitudinal axis D about which the rear axle 18 may oscillate is preferably coincident with the longitudinal machine axis A about which the front axle 16 may pivot as shown, or is at least parallel and close thereto.

It can be seen that the rear frame side members 30, 31 are generally wider spaced apart than the front frame members 24, 25, with one of the rear frame side members, member 31, offset from its adjoining front frame member 25. The front frame members 24, 25 are more closely spaced than the rear frame side members 30, 31 for maximum front frame 22 strength, required for a reason explained below. Like the front frame 22, the rear frame 23 includes top and bottom closure plates indicated at 58, 59, to add strength and stiffness.

The operator's cab 12 is at least partly supported by the front frame 22, on a transversely extending support member 60 which is rigidly fixed to one of the front frame members 25, and thus the cab 12 is positioned at one side of the machine 10.

The working arm 15 is located generally transversely centrally of the machine 10, but is mounted at a longitudinal position 62 between the cab 12 and the first transverse axis C on a mounting provided by the front frame part 22, close to the axle 16.

The working arm 15 includes a first part 64 and a second part 65, which parts are pivotally connected for relative pivotal movement about a second transverse axis E, when an angle ∝ between them is adjusted. At a first end 66, the first arm part 64 is pivotally mounted at the mounting position 62 of the front frame 22, for pivotal movement about a third transverse axis F, in a mounting which extends between the front frame members 24, 25. The working arm 15 is mounted on the front frame 22 such that it is pivotable relative to the chassis 11 so as to bring the pivotal connection between the first and second parts 64, 65 to a position alongside the cab 12.

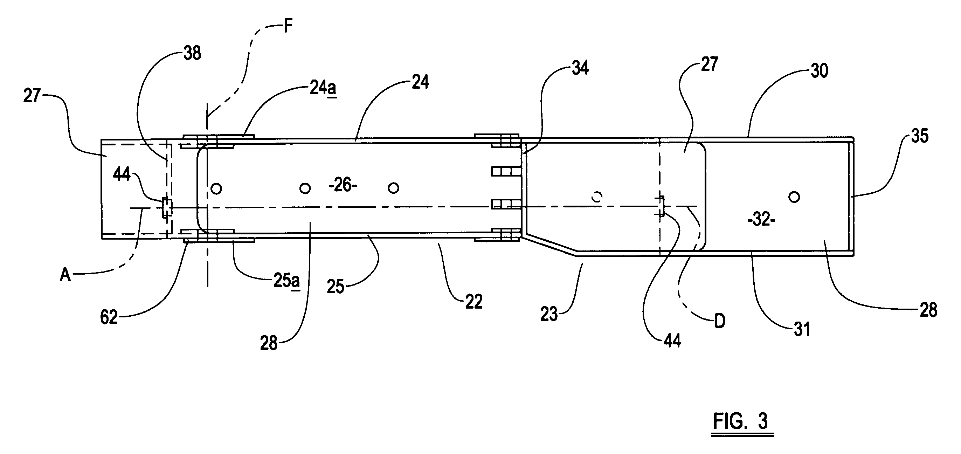

As shown in figure 3, in the regions of the mounting position 62, the front frame members 24, 25 are each reinforced with a reinforcing plate 24a, 25a, there being an opening through the front frame members 24, 25 and the reinforcing plates 24a, 25a to receive a pivot pin or the like which forms the pivotal mounting of the first arm part 64 to the front frame 22.

At the opposite end to the mounting 62 to the front frame 22, the first arm part 64 is pivotally connected to a first end 68 of the second arm part 65, adjustment of the angle ∝ between the first and second arm parts 64, 65 being achieved by the operation of one or a pair or more of first linear hydraulic actuators 70 which act between the first and second arm parts 64, 65, under the control of an operator.

To pivot the first arm part 64 about the third transverse axis F, one or a pair or more of second linear hydraulic actuators 71 is operated by the operator. The second actuator or actuators 71 each extend between a mounting 72 provided by the front frame 22 (in a similar manner to the mounting 62 provided by the front frame 22 for the first arm part 64) and the first arm part 64, the actuator or actuators 71 each extending rearwardly from the first arm part 64.

The second arm part 65 includes a plurality of relatively telescopic sections, two in the example described with reference to the drawings, at 75, 76, the outermost section 76 carrying at a second end of the second arm part 65, a load handling implement such as a loading forks 78, for handling loads.

As will be appreciated from figure 2, when it is desired to move a load handling implement 68 and home load towards and away from the remainder of the machine 10, this may be achieved by any or a combination of the following, namely:-
i. changing the length of the first linear actuator 70 or actuators to pivot the second arm part 65 about the second transverse axis E;
ii. changing the length of the second linear actuator 71 to pivot the first arm part 64 about the third transverse axis F, which has the result of moving second transverse axis E along an arc G;
iii. Extending/retracting the telescopic sections 75, 76.

It can be seen that there is a linear actuator 80 which extends between the (outermost telescopic section 76 of the) second arm part 65 which when operated causes pivotal movement of the load handling implement 78 about a fifth transverse axis H of the working arm 15, so that the attitude of the load handling implement 78 may be maintained during lifting and lowering of the working arm 15, and otherwise adjusted.

In this example, an engine 82 which provides power for machine 10 operation, is provided behind the operator's cab 12, and is supported on a support part 83 of the rear frame part 23. A cooling pack or packs for cooling engine fluids/hydraulic fluid used to operate the various actuators 70,71, 80 etc., a battery and oil tank 88 are, in this example, accommodated on the other side of the working arm to the cab 12, but may alternatively be accommodated behind the cab 12.

A fluid reservoir, such as a fuel tank 86 may be accommodated beneath the transverse cab 12 support member 60.

By virtue of the mounting 62 of the working arm 15 directly by the front frame part 22, torsional forces arising, for example when the machine 10 is on transversely uneven ground and with the working arm 15 in a raised condition, are dissipated directly into front frame members 24, 25 of the chassis 11, and not into any machine superstructure as a whole, as with conventional machines. This provides for increased structural torsional rigidity of the machine 10 during high load, high lifting conditions.

Further, because the mounting position 62 for the working arm 15 is close to the axis C of rotation of the front wheels 19, between the front axle 16 and the cab 12, torsional loads are dissipated in relatively short extents of the frame members 24, 25 which can thus be made locally sufficiently strong for rated loadings.

To provide for the working arm 15 to be securely maintained in a set position while the machine 10 is travelling over the ground, it can be seen that the rear side frame members 30, 30 of the rear frame part 23, adjacent to the front frame part 22, are shaped to provide a support surface 84 on which the first arm part 64 may rest when in a fully lowered condition.

Other features of the machine 10 will be apparent to those skilled in the art. For example, although not all shown, dampers would need to be provided to damp oscillations of the front 16 and/or rear axles 18, where oscillation is permitted, which dampers would extend between the axle body 40 and a part of a superstructure of the machine 10.

The superstructure of the machine 10 may include body panels to conceal and mount working parts of the machine 10 including these not described above, such as a hydraulic pump, transmission, battery and so on, which may be accommodated where required.

Various modifications may be made to the machine 10 described without departing from the scope of the invention.

For example, in the examples described with reference to the drawings, the front frame part 22 and the rear frame part 23 include top and bottom closure plates 58, 59 to add strength and stiffness, but in another example, one or both of the front and rear frame parts 22, 23 may be strengthened by another means. For example, one or both of the frame parts 22, 23 may be of H cross section with internal strengthening plates, and/or partly strengthened by top and/or bottom closure plates, and partly by internal plates.

In another example, instead of one or both of the front axle 16 and rear axle 18 being able to oscillate about respective axis A and D, one or both of the axles 16, 18 may be suspended from the chassis 11.

## Claims

1. A load handling machine (10) having a chassis (11) including an elongate front frame part (22) and a rear frame part (23), and an operator's cab (12) supported at least in part by the front frame (22) mounted to one side of a longitudinal machine axis (A), the front frame part (22) including a pair of frame members (24, 25) which extend generally parallel in a generally longitudinal direction of the machine (10), the front frame part (22) providing a mounting for a front axle (16) carrying a pair of steerable ground engaging wheels (19), each of which is rotatable about a first transverse front axle axis (C) when the wheels (19) are each in a straight ahead position, and the front frame part (22) providing a mounting for a working arm (15) between the pair of front frame members (24, 25) longitudinally between the first transverse axis (C) and the cab (12), the working arm (15) including first (64) and second (65) parts which are pivotally connected together so that the angle (α) between the first (64) and second (65) parts about a second transverse axis (E) is adjustable, the first arm part (64) being pivotally connected at or adjacent one end, to the front frame part (22) at a longitudinal position between the front axle axis (C) and the cab (12) for pivotal movement about a third transverse axis (F), and the first arm part (64) being connected at or adjacent an opposite end to a first end of the second arm part (65), and there being in use, a working implement (78) mounted at or adjacent to a second end of the second arm part (65).

2. A machine (10) according to claim 1 wherein the mounting for the working arm (78) is provided on the front frame part (22) between the pair of front frame members (24, 25) longitudinally between the first transverse axis (C) and the cab (12).

3. A machine (10) according to claim 1 or 2 wherein there is provided at least one first linear actuator (70) which acts between the first arm part (64) and the second arm part (65) and which is operable to adjust the angle (α)between the first and second arm parts about the second transverse axis (E).

4. A machine (10) according to claim 3 wherein to move the first arm part (64) relative to the front frame part (22) about the first transverse axis (C), there is provided at least one second linear actuator (71) which acts between the front frame part (22) and the first working arm part (64), the second actuator (71) being pivotally connected to the front frame part (22) at a position located rearwardly of the mounting of the working arm (15) to the front frame part (64), and to the first arm part so as to extend rearwardly away from the first arm part (64) to its front frame mounting.

5. A machine (10) according to claim 4 wherein the second actuator mounting to the front frame part (22) is positioned towards a rear or rearwardly of the cab (12).

6. A machine (10) according to any one of the preceding claims wherein the second part (65) of the working arm (15) includes a plurality of relatively telescopic sections(75, 76).

7. A machine (10) according to any one of the preceding claims wherein the front frame members (24, 25) each include a generally upright plate-like part, defining between them, a space (26).

8. A machine (10) according to claim 7 wherein the mounting for the working arm (15) extends between and is secured to each of the plate-like parts.

9. A machine (10) according to claim 7 or 8 wherein upper (34) and lower (35) closure plates are secured to the upright plate-like parts so that where provided, the front frame part (22) has a generally box section configuration.

10. A machine (10) according to any one of the preceding claims wherein the front axle (16) is rigidly fixed to the front frame part (22).

11. A machine (10) according to anyone of claims 1 to 9 wherein the front axle mounting permits the axle (16) to oscillate about a generally longitudinal axis which is coincident with or slightly offset from a central longitudinal axis (A) of the machine (10), and the front axle (16) is provided at or adjacent a front end of the front frame part (22) such that the longitudinal axis of oscillation is located between tops and bottoms of the front frame members 24, 25).

12. A machine (10) according to any one of the preceding claims wherein the front frame part (22) includes a transverse support member (60) connected to and extending transversely from one of the front frame members (24, 25), to provide support for the cab (12).

13. A machine (10) according to claim 12 wherein a fluid reservoir such as a fuel tank (86) is mounted generally beneath the transverse support member (60).

14. A machine (10) according to any one of the preceding claims wherein the rear frame part (33) of the chassis (11) is integral with or securely and rigidly connected to the front frame part (22).

15. A machine (10) according to any one of the preceding claims wherein the rear frame part (23) is shaped to provide an upper support surface on which the first part (64) of the arm (15) rests when in a fully lowered position.

16. A machine (10) according to claim 14 or claim 15 wherein the rear frame part (23) includes a pair of side members (30, 31) which are spaced apart at least over a substantial portion of their longitudinal extent wider than the front frame members.

17. A machine (10) according to claim 16 wherein the rear frame (23) includes upper and lower closer plates to increase the stiffness of the rear frame part.

18. A machine (10) according to any one of the preceding claims wherein the rear frame (23) provides a mounting for a rear axle (18) which carries a pair of rear wheels (20); the rear wheels (20) being rotatable about a fourth generally transverse axis and the rear axle (20) mounting permitting the rear axle to oscillate about a generally longitudinal axis (D).

19. A machine (10) according to any one of the preceding claims wherein an engine (82) of the machine (10) is carried by the rear frame part (23) behind the cab (12).
